(19)

Europäisches
Patentamt
European
Patent Office
Office européen
des brevets

(11) **EP 2 209 298 A1**

(12) **EUROPEAN PATENT APPLICATION**

(43) Date of publication:
**21.07.2010 Bulletin 2010/29**

(51) Int Cl.:
**H04N 1/60** (2006.01)

(21) Application number: **10150703.6**

(22) Date of filing: **14.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **15.01.2009 KR 20090003389**

(71) Applicants:
• **Samsung Electronics Co., Ltd.**
  **Yeongtong-gu**
  **Suwon-si, Gyeonggi-do (KR)**
• **Inha-Industry Partnership Institute**
  **Incheon (KR)**

(72) Inventors:
• **Cho, Jae-Hun**
  **Gyeonggi-do (KR)**
• **Kim, Ji-Hye**
  **Gyeonggi-do (KR)**

• **Cho, Sung-Dae**
  **Gyeonggi-do (KR)**
• **Park, Min-Kyu**
  **Gyeonggi-do (KR)**
• **Park, Hee-Chan**
  **Gyeonggi-do (KR)**
• **Oh, Yun-Je**
  **Gyeonggi-do (KR)**
• **Kim, Kyoung-Tae**
  **Incheon (KR)**
• **Kim, Choon-Woo**
  **Incheon (KR)**
• **Jang, Seul-Ki**
  **Incheon (KR)**

(74) Representative: **Grünecker, Kinkeldey,**
  **Stockmair & Schwanhäusser**
  **Anwaltssozietät**
  **Leopoldstrasse 4**
  **80802 München (DE)**

(54) **Method for adjusting white balance**

(57)    A white balance adjustment method is disclosed, in which a plurality of input pixels are transformed into a digital component color space, a hue region of each of the color-space transformed input pixels is determined, and a transformation matrix is determined according to the determined hue region.

FIG.1

EP 2 209 298 A1

**Description**

**BACKGROUND OF THE INVENTION**

1. Field of the Invention

The present invention relates generally to a method for adjusting white balance in an imaging device, and in particular, to a method for adjusting white balance of single-colored images.

2. Description of the Related Art

Image devices for providing and/or capturing color images require White Balance Adjustment (WBA) in order to maintain the same or similar color of a reproduced or captured image as or to a color of a related subject recognized by a user.

Due to a frequent change in conditions under which a subject is captured, particularly to a change in a light source for illuminating the subject or an external background with which the subject is captured, a color of the captured or reproduced image may be different from a color of the subject that the user first recognized. A human being may not sense a color change because of his/her high adaptability to colors regardless of illumination or background variations, whereas a color tone of a subject recognized by a user may be different from that of a captured or reproduced image since image devices, such as a digital camera and an image player, are limited in terms of adaptability to colors.

The white balance adjustment is a process of adjusting, as described above, an image having a different color tone from that of a subject recognized by a user such that the adjusted image may have the same or similar color as or to that of the subject the user first recognized. White balance, which is based on white regions among many different color regions in an image, is a color correction method of restoring a white color which may change depending on light sources (e.g., sunlight, a fluorescent lamp, and an incandescent lamp) for illuminating a subject or on backgrounds, to the initial white color that the user recognized.

One of the well-known white balance adjustment methods estimates a type of background lighting (light source) used for image capturing and adjusts white balance according to the estimated background lighting. This white balance adjustment method finds a white area in an image and adjusts a gain of each channel using a mean value of Red, Green Blue (RGB) values or color difference signals (R-Y) and (B-Y) in image information corresponding to the white area. Another white balance adjustment method adjusts a gain of each channel depending on a mean value per channel of the entire image, without estimating the light source. In this method, it is assumed that a color determined by a mean value of each channel is gray in a condition in which an input image undergoes a sufficient color change. That is, white balance of an image is sustainable by adjusting gains of RGB values of the image so that a mean value of each channel is constant.

The above-described white balance adjustment methods can adjust white balance only if an image to be white balance- adjusted, undergoes a sufficient color change or has white areas. Otherwise, the methods may cause color distortion.

**SUMMARY OF THE INVENTION**

An aspect of the present invention is to substantially solve at least the above problems and/or disadvantages and to provide at least the advantages below. Accordingly, an aspect of the present invention is to provide a method capable of adjusting white balance not only of a single-colored image, but also of an image with no white area.

According to an aspect of the present invention, there is provided a method for adjusting white balance, including transforming a plurality of input pixels into a digital color space, determining a hue region of each of the color-space transformed input pixels, and determining a transformation matrix according to the determined hue region.

**BRIEF DESCRIPTION OF THE DRAWINGS**

The above and other objects, features and advantages of the present invention will become more apparent from the following detailed description when taken in conjunction with the accompanying drawing in which:

FIG. 1 illustrates a method for adjusting white balance according to an embodiment of the present invention;
FIG. 2 illustrates hue regions according to an embodiment of the present invention; and
FIG. 3 illustrates a transformation matrix according to an embodiment of the present invention.

**DETAILED DESCRIPTION OF EMBODIMENTS OF THE INVENTION**

Embodiments of the present invention will be described herein below with reference to the accompanying drawings. In the following description, well-known functions or constructions are not described in detail for the sake of clarity and conciseness.

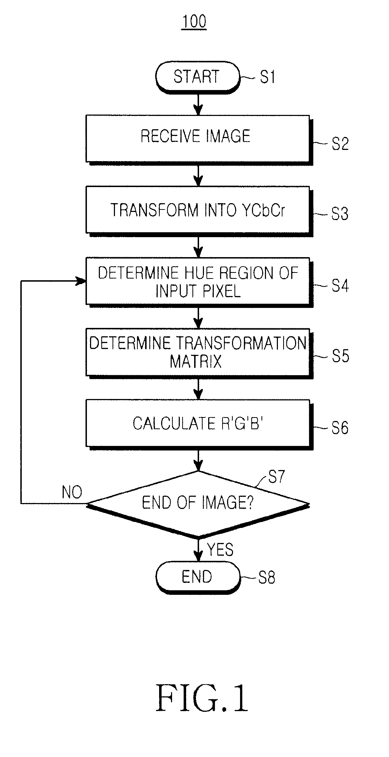

FIG. 1 illustrates a method for adjusting white balance according to an embodiment of the present invention. Referring to FIG. 1, a white balance adjustment method 100 includes receiving an input image to be white balance - adjusted at step S2, upon start S1 of the white balance adjustment, transforming a plurality of input pixels forming the input image into a digital color space (YCbCr) or digital component color space at step S3, determining a hue region of each of the digital-color-space transformed input pixels at step S4, determining a transformation matrix according to the determined hue region at step S5, calculating a second color table (R'G'B') by applying the transformation matrix determined according to the hue regions of a first color table (RGB of the input pixels) at step S6, and determining whether the current input pixel is the last one in the input image at step S7, proceeding to end step S8 if the current input pixel is the last pixel in the image, and returning to step S4 to determine a hue region of the next input pixel if the current input pixel is not the last pixel.

That is, when there is an image to be white balance- adjusted, such as an image to be provided to a user or a captured image, the white balance adjustment method according to the present invention determines hue regions by transforming the image into a digital color space, and provides the user with an image that is transformed using a color table to which a transformation matrix based on the determined hue regions is applied.

The step S3 of transformation into a digital color space (YCbCr) can be defined as set forth in the following Equation (1).

$$Y = 0.29990 \times R + 0.5870 \times G + 0.1140 \times B$$
$$Cb = -0.1687 \times R - 0.3313 \times G + 0.5000 \times B \qquad (1)$$
$$Cr = 0.5000 \times R - 0.4187 \times G - 0.0813 \times B$$

In Equation (1), Y denotes a luminance component of the digital color space, and Cb and Cr denote different chrominance components of the digital color space. R, G and B denote a red coordinate, a green coordinate and a blue coordinate in the RGB coordinate system, respectively.

The digital color space (YCbCr) is a type of color space used in digital image devices, wherein Y denotes brightness, Cb denotes the strength of a blue color, and Cr denotes the strength of a red color.

That is, step S3 of transformation into a digital color space (YCbCr) is for transforming an image received in a form of a trichromatic system (RGB) based on the first color table into a form of the digital color space (YCbCr) which can be recognized by digital devices.

The hue region determination step S4 is for determining hue regions in which a captured single-colored subject or a single-colored image to be provided to a user is included. Each image, which is captured by digital devices or to be provided to the user, is comprised of a plurality of pixels, and each image on which the white balance adjustment is to be performed, such as the above-described image (image which is captured or to be provided to the user), is defined as an input image. Therefore, the input image described above is also made up of a plurality of pixels, and each pixel on which the white balance adjustment is to be performed is referred to as an input pixel.

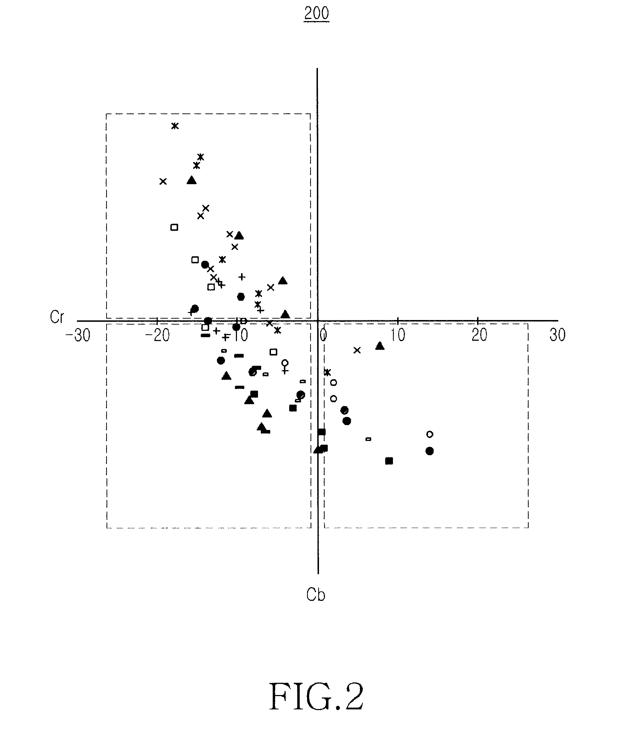

FIG. 2 is a graph 200 illustrating hue regions to which input pixels belong according to an embodiment of the present invention. In FIG. 2, the hue regions are defined by equally dividing a Cb-Cr plane into 4 quadrants. However, they may be differently defined according to image sensors or displays.

The step S4 of determining a hue region of each of the digital-color-space transformed input pixels is for determining in which one of the hue regions in the form of the graph shown in FIG. 2 the input pixels are included, which are to be white-balance adjusted.

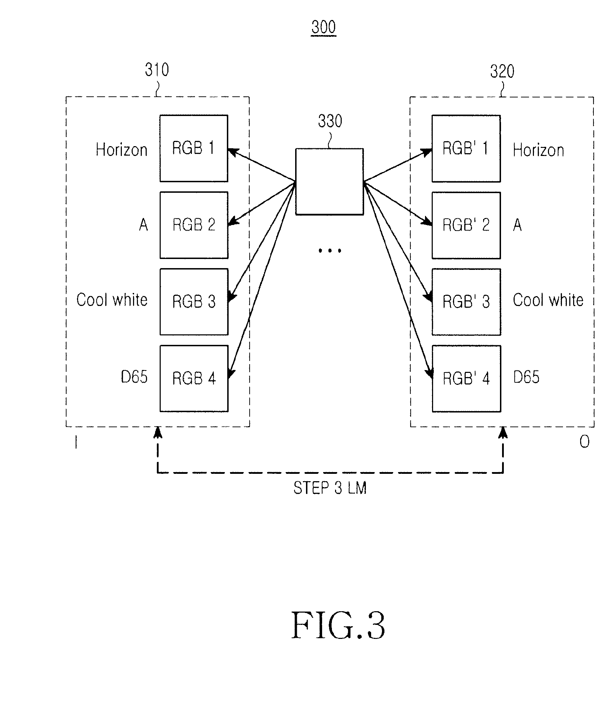

The above-described transformation matrix is used to obtain a new color table (R'G'B'), which is white-balance adjusted, and can be obtained using the following Equations (2) and (3). The transformation matrix can be selected according to a color to which a single-colored subject, which is to be white-balance adjusted, belongs. The transformation matrix determination step S5 can be described with reference to FIG. 3.

$$I = LM \times O \qquad (2)$$

$$IO^{-1} = LM \qquad\qquad (3)$$

In Equations (2) and (3), I denotes image data 310 in each color (e.g., red, blue, green) according to each state (external conditions such as a light source), LM denotes data 330 in a color which is a criterion of each color to be transformed, and O denotes data 320 obtained by transforming the image data I.

That is, a matrix obtained in Equation (2) can be determined as a transformation matrix in each color through linear transformation (LM) in Equation (3).

The transformation matrix can be determined by acquiring single-colored images per light source, transforming each of the images acquired per light source into an original color based on information about each light source, and calculating a transformation matrix by performing linear transformation on image data before the transformation and image data after the transformation.

In transforming each of the images acquired per light source into an original color based on information about each light source, a gain is calculated per channel using mean RGB of a white image captured per light source as the information about each light source. The transformation into the original color can be performed by applying the calculated gain to a captured single-colored image. In calculating a 3x3 transformation matrix by performing linear transformation on image data before the transformation and image data after the transformation, mean RGB of the entire image is used as the image data before and after the transformation. A transformation matrix of each hue region can be obtained by performing this process on each hue region.

Thus, once a hue region of each input pixel is determined, a transformation matrix to be applied can be selected, and a new second color table (R'G'B') can be calculated by applying the transformation matrix to a first color table (RGB) of the input pixel.

As is apparent from the foregoing description, according to embodiments of the present invention, by calculating a transformation matrix according to a hue region to which each input pixel belongs and applying a different transformation matrix to each of hue regions corresponding to the input pixels according to the calculated transformation matrix, it is possible to perform white balance adjustment on an image captured with a single-colored background, thus minimizing color distortion.

While the invention has been shown and described with reference to a certain preferred embodiment thereof, it will be understood by those skilled in the art that various changes in form and details may be made therein without departing from the spirit and scope of the invention as defined by the appended claims.

**Claims**

1. A method for adjusting white balance, comprising:

   transforming a plurality of input pixels into a digital color space;
   determining a hue region of each of the color-space transformed input pixels; and
   determining a transformation matrix according to the determined hue region.

2. The method of claim 1, wherein a second color table is calculated by applying the transformation matrix to a first color table of each of the input pixels.

3. The method of claim 1, wherein the determining of the transformation matrix comprises:

   acquiring single-colored images per light source;
   transforming each of the images acquired per light source into an original color based on information about each light source; and
   calculating a transformation matrix by performing linear transformation on image data before the transformation and image data after the transformation.

4. The method of claim 3, wherein the transformation matrix satisfies the following equation,

$$IO^{-1} = LM,$$

where I denotes image data in each color determined through hue region determination according to each light source, LM denotes data in a color which is a criterion of each color to be transformed, and O denotes data obtained by transforming the image data I.

5. The method of claim 1, wherein the transforming of the plurality of input pixels into the digital color space satisfies the following equation,

$$Y = 0.29990 \times R + 0.5870 \times G + 0.1140 \times B$$

$$Cb = -0.1687 \times R - 0.3313 \times G + 0.5000 \times B$$

$$Cr = 0.5000 \times R - 0.4187 \times G - 0.0813 \times B$$

where Y denotes a Y coordinate of the digital color space, Cb denotes a Cb coordinate of the digital color space, Cr denotes a Cr coordinate of the digital color space, R denotes a red coordinate in an RGB coordinate system, G denotes a green coordinate in the RGB coordinate system, and B denotes a blue coordinate in the RGB coordinate system.

<u>100</u>

START — S1

RECEIVE IMAGE — S2

TRANSFORM INTO YCbCr — S3

DETERMINE HUE REGION OF INPUT PIXEL — S4

DETERMINE TRANSFORMATION MATRIX — S5

CALCULATE R'G'B' — S6

END OF IMAGE? — S7

NO

YES

END — S8

FIG.1

FIG.2

FIG.3

Europäisches
Patentamt

European
Patent Office

Office européen
des brevets

**EUROPEAN SEARCH REPORT**

Application Number

EP 10 15 0703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/131635 A1 (COOPER TED J [US]) 19 September 2002 (2002-09-19) * paragraph [0050] - paragraph [0053] * * paragraph [0066] - paragraph [0088]; figures 9-12 * | 1-5 | INV. H04N1/60 |
| X | EP 1 816 874 A1 (MITSUBISHI ELECTRIC CORP [JP]) 8 August 2007 (2007-08-08) * paragraph [0002] - paragraph [0033] * | 1-5 | |
| X | US 2008/292184 A1 (PARK KEUN WOO [KR] ET AL) 27 November 2008 (2008-11-27) * paragraph [0031] - paragraph [0044]; figure 1 * * paragraph [0099] - paragraph [0126]; figures 8-12 * | 1-5 | |
| A | US 2007/268380 A1 (TAKASUMI SHINYA [JP]) 22 November 2007 (2007-11-22) * paragraph [0007] - paragraph [0008] * * paragraph [0037] - paragraph [0071] * | 1-5 | TECHNICAL FIELDS SEARCHED (IPC)<br><br>H04N |

The present search report has been drawn up for all claims

| Place of search | Date of completion of the search | Examiner |
|---|---|---|
| Munich | 26 March 2010 | Bakstein, Hynek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                     EP 10 15 0703

This annex lists the patent family members relating to the patent documents cited in the above-mentioned European search report.
The members are as contained in the European Patent Office EDP file on
The European Patent Office is in no way liable for these particulars which are merely given for the purpose of information.

26-03-2010

| Patent document cited in search report | | Publication date | Patent family member(s) | | Publication date |
|---|---|---|---|---|---|
| US 2002131635 | A1 | 19-09-2002 | NONE | | |
| EP 1816874 | A1 | 08-08-2007 | CN | 1973553 A | 30-05-2007 |
| | | | WO | 2006057037 A1 | 01-06-2006 |
| | | | JP | 4023518 B2 | 19-12-2007 |
| | | | US | 2008007657 A1 | 10-01-2008 |
| US 2008292184 | A1 | 27-11-2008 | DE | 102007048097 A1 | 05-06-2008 |
| | | | JP | 2008141732 A | 19-06-2008 |
| | | | KR | 20080049458 A | 04-06-2008 |
| US 2007268380 | A1 | 22-11-2007 | CN | 101072365 A | 14-11-2007 |
| | | | JP | 2007306320 A | 22-11-2007 |

EPO FORM P0459

For more details about this annex : see Official Journal of the European Patent Office, No. 12/82